# EUROPÄISCHE PATENTANMELDUNG

(11) **EP 2 146 411 A2**
(43) Veröffentlichungstag der Anmeldung: **20.01.2010**
(21) Anmeldenummer: 09005971.8
(22) Anmeldetag: 30.04.2009
(51) Int. Cl.: H02B 13/00

(54) **Sammelschienenkupplung für eine elektrische Schaltanlage**

(30) Priorität: 16.07.2008 DE 102008033495
(71) Anmelder: AREVA Energietechnik GmbH, 93001 Regensburg (DE)
(72) Erfinder: Starck, Thierry, Dipl.-Ing., 2492 MZ Den Haag (NL)
(74) Vertreter: Schäfer, Wolfgang

(57) **Zusammenfassung**

Es wird eine Sammelschienenkupplung (10) für eine elektrische Schaltanlage insbesondere für den Bereich der Mittelspannung beschrieben. Es ist ein Gehäuse (20) aus Metall vorhanden, das eine zylinderförmige Ausbildung aufweist, in deren beide Enden jeweils eine Sammelschiene (11, 12) mit einer sie jeweils umgebenden isolierenden Muffe (14, 15) aufgenommen ist. Die beiden Sammelschienen (11, 12) sind im Innenraum des Gehäuses (20) über ein Metallband (26) miteinander verbunden und das Gehäuse (20) ist mit einem Isoliermaterial gefüllt.

## Beschreibung

Die Erfindung betrifft eine Sammelschienenkupplung für eine elektrische Schaltanlage nach dem Oberbegriff des Anspruchs 1.

Eine elektrische Schaltanlage insbesondere im Bereich der Mittelspannung besteht üblicherweise aus einer Mehrzahl von nebeneinander angeordneten elektrischen Schalteinheiten. Die einzelnen Schalteinheiten weisen dabei jeweils mehrere zumeist übereinander angeordnete Funktionsmodule auf. So sind häufig in einem mittleren Bereich elektrische Schaltgeräte, beispielsweise Trenn- oder Leistungsschalter vorhanden, und in einem unteren Bereich der Schalteinheit sind Steckerbuchsen vorgesehen, über die nach unten in einen Kanal abgehende Kabel angeschlossen werden können. Die nebeneinander stehenden Schalteinheiten sind üblicherweise über Sammelschienen elektrisch miteinander verbunden. Hierzu können die Sammelschienen innerhalb oder oberhalb der Schalteinheiten angeordnet sein, um dann mit Hilfe einer sogenannten Sammelschienenkupplung miteinander und gegebenenfalls mit den Schalteinheiten verbunden zu werden.

Ein Beispiel für eine Sammelschienenkupplung ist aus der DE 102 46 557 A1 bekannt. Dort ragt jede der beiden Sammelschienen aus einer Durchführung der zugehörigen Schalteinheit heraus. Hinsichtlich der Gehäuse der Schalteinheiten sind die Durchführungen gasdicht und elektrisch isolierend ausgeführt. Die beiden Sammelschienen sind koaxial zueinander ausgerichtet und über eine elektrisch leitfähige Kupplung miteinander verbunden. Um die miteinander verkuppelten Sammelschienen herum erstreckt sich eine Verbindungsmuffe, die schlauchartig ausgebildet ist und aus einem elastischen Isoliermaterial besteht.

Aufgabe der Erfindung ist es, diese bekannte Sammelschienenkupplung zu verbessern.

Die Erfindung löst diese Aufgabe durch eine Sammelschienenkupplung für eine elektrische Schaltanlage insbesondere für den Bereich der Mittelspannung nach dem Anspruch 1.

Erfindungsgemäß ist ein Gehäuse aus Metall vorhanden, das eine zylinderförmige Ausbildung aufweist, in deren beide Enden jeweils eine Sammelschiene mit einer sie jeweils umgebenden isolierenden Muffe aufgenommen ist. Die beiden Sammelschienen sind im Innenraum des Gehäuses über ein Metallband miteinander verbunden und das Gehäuse ist mit einem Isoliermaterial gefüllt.

Die erfindungsgemäße Sammelschienenkupplung ist einerseits aufgrund des metallischen Gehäuses äußerst stabil ausgebildet. Dies ermöglicht eine ebenfalls stabile und damit sichere Verbindung des Gehäuses mit den zu verbindenden Sammelschienen. Andererseits wird durch das mit dem Isoliermaterial gefüllte Gehäuse eine äußerst hohe Spannungsfestigkeit der erfindungsgemäßen Sammelschienenkupplung erreicht. Ein weiterer Vorteil der Erfindung besteht in ihrem einfachen Aufbau. Insbesondere ist über das Metallband in einfacher und trotzdem stabiler Weise eine sichere elektrische Verbindung zwischen den beiden Sammelschienen erreichbar.

Bei vorteilhaften Weiterbildungen der Erfindung sind die beiden Sammelschienen gasdicht mit der jeweils zugehörigen Muffe verbunden und/oder es sind die beiden Sammelschienen zusammen mit den sie umgebenden Muffen gasdicht mit dem Gehäuse verbunden. Durch diese Maßnahmen wird insgesamt eine gasdichte Abdichtung der Sammelschienenkupplung erreicht.

Bei einer weiteren vorteilhaften Ausbildung der Erfindung weist das Gehäuse eine Öffnung auf, durch die das Metallband in den Innenraum des Gehäuses einführbar ist, und über die das Isoliermaterial in den Innenraum des Gehäuses einfüllbar ist. Mit Hilfe dieser Öffnung wird somit eine besonders einfache Montage der Sammelschienenkupplung erreicht.

Besonders vorteilhaft ist es dabei, wenn die Öffnung mit einer Platte verschlossen ist, die vorzugsweise einen Deckel mit einem dem Isoliermaterial zugeordneten Balg aufweist. Damit wird einerseits eine gasdichte Abdichtung der Sammelschienenkupplung erreicht, wobei gleichzeitig eine Kompensation von Volumenänderungen des Isoliermaterials im Innenraum des Gehäuses der Sammelschienenkupplung möglich ist.

Eine andere vorteilhafte Weiterbildung der Erfindung besteht darin, dass das Gehäuse mit einer Ausbildung versehen ist, in der ein Durchführung aufgenommen ist, das mit einem elektrisch leitfähigen Kontaktstück versehen ist, das mit dem Metallband verbunden ist. Auf diese Weise wird ermöglicht, dass weitere elektrische Komponenten, insbesondere eine Anschlussschiene für eine unterhalb der Sammelschienenkupplung angeordnete Schalteinheit, über das Kontaktstück an die Sammelschienen angeschlossen werden können.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

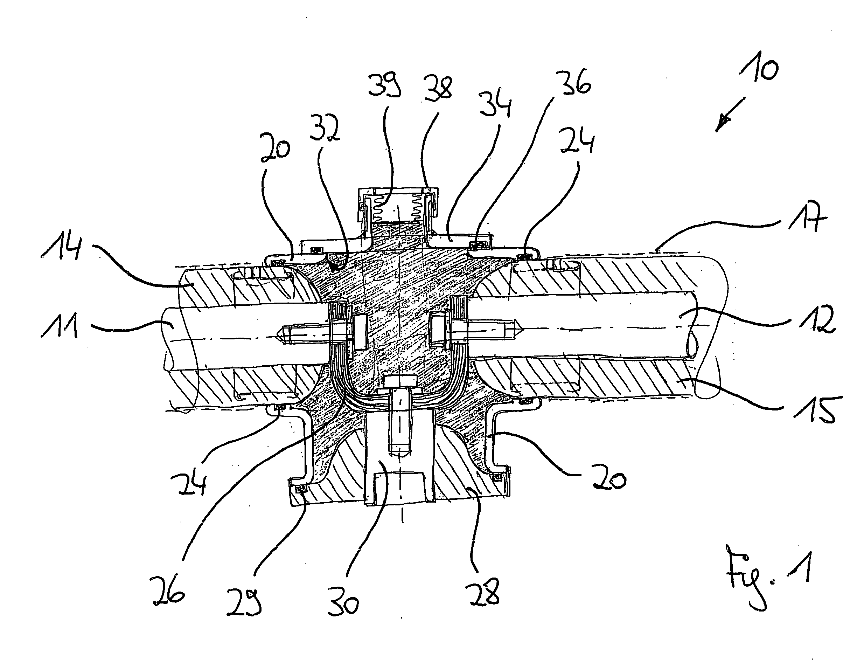

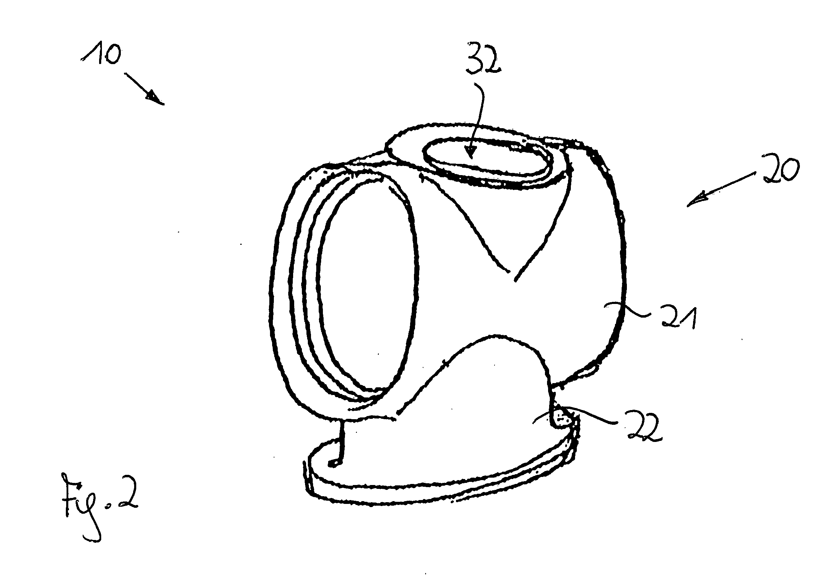

Figur 1 zeigt einen schematischen Längsschnitt durch ein Ausführungsbeispiel einer erfindungsgemäßen Sammelschienenkupplung für eine elektrische Schaltanlage und Figur 2 zeigt eine schematische Ansicht der Sammelschienenkupplung der Figur 1.

Bei der in den Figuren 1 und 2 dargestellten Sammelschienenkupplung 10 wird davon ausgegangen, dass zwei Sammelschienen 11, 12 einer elektrischen Mittelspannungsschaltanlage nebeneinander angeordnet sind. Weiter wird davon ausgegangen, dass die beiden Sammelschienen 11, 12 aus einem elektrisch leitfähigen Material bestehen und gemäß der Figur 1 einen im wesentlichen kreisförmigen Querschnitt aufweisen. Wie der Figur 1 ebenfalls entnommen werden kann, ist jede der beiden Sammelschienen 11, 12 von einer im wesentlichen rohrförmigen Muffe 14, 15 aus elektrisch isolierendem Material umgeben. Die Innendurchmesser der Muffen 14, 15 und die Außendurchmesser der jeweils zugehörigen Sammelschienen 11, 12 sind dabei derart vorgesehen, dass die Muffen 14, 15 gasdicht an den Sammelschienen 11, 12 anliegen.

Wie aus der Figur 1 hervorgeht, sind die beiden Sammelschienen 11, 12 zusammen mit den sie umgebenden beiden Muffen 14, 15 im wesentlichen koaxial zueinander ausgerichtet und ihre freien, einander zugewandten Enden weisen einen Abstand voneinander auf. Weiterhin kann der Figur 1 entnommen werden, dass die beiden Muffen 14, 15 auf ihrer Außenfläche mit einer elektrisch leitfähigen Schicht 17 versehen sind. Der konische Endbereich der beiden Muffen 14, 15 ist dabei nicht mit der leitfähigen Schicht versehen. In diesem Endbereich weisen die beiden Muffen 14, 15 eine Feldsteuerung in der Form eines eingegossenen Gitters oder dergleichen auf.

Die Sammelschienenkupplung 10 der Figuren 1 und 2 weist ein Gehäuse 20 auf, das eine Gestalt besitzt, die bildlich mit zwei etwa quer zueinander ausgerichteten und einander durchdringenden Zylindern 21, 22 vergleichbar ist. Der erste Zylinder 21 ist zur Aufnahme der beiden Sammelschienen 11, 12 mit den beiden Muffen 14, 15 vorgesehen und weist einen Innendurchmesser auf, der im wesentlichen dem Außendurchmesser der beiden Muffen 14, 15 entspricht. Der zweite Zylinder 22 besitzt einen ähnlichen Durchmesser wie der erste Zylinder 21 und ist unter anderem für den Zugang zu dem Innenraum des Gehäuses 20 vorgesehen.

Wie aus der Figur 1 hervorgeht, können die beiden Sammelschienen 11, 12 in ihrer koaxialen Ausrichtung und mit den sie jeweils umgebenden Muffen 14, 15 von beiden Seiten zumindest geringfügig in die beiden Enden des ersten Zylinders 21 des Gehäuses 20 eingesteckt werden. Wie ebenfalls der Figur 1 zu entnehmen ist, ist zwischen dem Gehäuse 20 und jeder der beiden Muffen 14, 15 zum Zwecke der gasdichten Abdichtung jeweils eine Ringdichtung 24 vorhanden.

Gemäß der Figur 1 sind die beiden Sammelschienen 11, 12 im Innenraum des Gehäuses 20 über ein insbesondere flexibles Metallband 26 elektrisch miteinander verbunden. Hierzu ist das Metallband 26 mit der Stirnseite jeder der beiden Sammelschienen 11, 12 verschraubt.

Der zweite Zylinder 22 des Gehäuses 20 ist an seinem einen Ende mit Hilfe einer etwa topfförmigen Durchführung 28 verschlossen. Zur gasdichten Abdichtung ist zwischen dem Außenrand der Durchführung 28 und dem Gehäuse 20 eine Ringdichtung 29 vorhanden. Weiterhin ist die Durchführung 28 mit einer etwa koaxial zum Zylinder 22 ausgerichteten, vom Innenraum des Gehäuses 20 nach außen führenden Öffnung versehen, in der ein im wesentlichen zylinderförmiges und elektrisch leitfähiges Kontaktstück 30 gasdicht aufgenommen ist. Die zum Innenraum des Gehäuses 20 weisende Stirnseite des Kontaktstücks 30 ist mit dem Metallband 26 elektrisch verbunden, insbesondere verschraubt.

Die nach außen weisende Stirnseite des Kontaktstücks 30 kann mit einem Innengewinde versehen sein. Das Kontaktstück 30 kann damit mit weiteren elektrischen Komponenten mechanisch und elektrisch verbunden werden. Insbesondere kann eine Anschlussschiene an das Kontaktstück 30 angeschlossen sein, mit der eine unterhalb der Sammelschienenkupplung 10 angeordnete Schalteinheit der elektrischen Schaltanlage mit den beiden Sammelschienen 11, 12 verbunden werden kann.

An seinem der Durchführung 28 gegenüberliegenden Ende ist der Zylinder 22 des Gehäuses 20 mit einer Öffnung 32 versehen. In ihrem geöffneten Zustand kann durch diese Öffnung 32 hindurch das Metallband 26 in den Innenraum des Gehäuses 20 eingeführt werden. Weiterhin kann das Metallband 26 dann durch diese Öffnung 32 hindurch mit den beiden Sammelschienen 11, 12 und dem Kontaktstück 30 verschraubt werden.

Das Gehäuse 20 besteht aus einem elektrisch leitfähigen Material, beispielsweise aus einem Metall. Insbesondere kann das Gehäuse 20 als Gussteil aus Aluminium hergestellt sein. Zur Isolation ist der Innenraum des Gehäuses 20 mit einem Isoliermaterial gefüllt. Insbesondere ist der Innenraum mit einer Isolierflüssigkeit oder einem Isoliergel gefüllt. Dabei kann es sich beispielsweise um SF6 handeln, und zwar in einer flüssigen oder gelförmigen Form. Dieses Isoliermaterial kann durch die Öffnung 32 in den Innenraum des Gehäuses 20 eingefüllt werden.

Die Öffnung 32 des Gehäuses 20 ist mit einer im wesentlichen kreisförmigen Platte 34 verschlossen. Insbesondere kann die Platte 34 in nicht-dargestellter Weise mit dem Gehäuse 20 verschraubt sein. Zwischen der Platte 34 und dem Gehäuse 20 ist zur gasdichten Abdichtung eine Ringdichtung 36 vorhanden.

Die Platte 34 ist mit einem gasdicht aufsteck- oder aufschraubbaren Deckel 38 versehen. Bei geöffnetem Deckel 38 kann das Vorhandensein und die Menge des vorhandenen Isoliermaterials überprüft werden. Weiterhin kann bei geöffnetem Deckel 34 Isoliermaterial in den Innenraum des Gehäuses 20 eingefüllt oder nachgefüllt werden.

Im Inneren dieses Deckels 38 kann ein flexibler Balg 39 vorhanden sein, der im verschlossenen Zustand des Deckels 38 mit dem Isoliermaterial in Kontakt ist. Wenn sich nunmehr das Volumen des Isoliermaterials beispielsweise aufgrund von Temperaturschwankungen verändert, so wird diese Veränderung durch den Balg 39 kompensiert.

Anstelle der Platte 34 mit dem Deckel 38 kann die Öffnung 32 auch mit einem Kontaktstück verschlossen sein, an das insbesondere ein Spannungswandler angeschlossen ist. Das Kontaktstück kann dann über ein Metallband mit den Sammelschienen 11, 12 verbunden werden.

Es versteht sich, dass die beschriebene Sammelschienenkupplung 10 auch für die Verbindung von zwei oder mehreren Sammelschienen ausgebildet sein kann. Ebenfalls versteht es sich, dass auf einer Seite der Sammelschienenkupplung 10 anstelle der dort an sich vorhandenen Sammelschiene auch eine andere elektrische Komponente vorhanden sein kann, beispielsweise ein Stromwandler oder dergleichen.

## Patentansprüche

1. Sammelschienenkupplung (10) für eine elektrische Schaltanlage insbesondere für den Bereich der Mittelspannung, **dadurch gekennzeichnet, dass** ein Gehäuse (20) aus Metall vorhanden ist, das eine zylinderförmige Ausbildung aufweist, in deren beide Enden jeweils eine Sammelschiene (11, 12) mit einer sie jeweils umgebenden isolierenden Muffe (14, 15) aufgenommen ist, dass die beiden Sammelschienen (11, 12) im Innenraum des Gehäuses (20) über ein Metallband (26) miteinander verbunden sind, und dass das Gehäuse (20) mit einem Isoliermaterial gefüllt ist.

2. Sammelschienenkupplung (10) nach Anspruch 1, wobei die beiden Sammelschienen (11, 12) gasdicht mit der jeweils zugehörigen Muffe (14, 15) verbunden sind.

3. Sammelschienenkupplung (10) nach einem der vorstehenden Ansprüche, wobei die beiden Sammelschienen (11, 12) zusammen mit den sie umgebenden Muffen (14, 15) gasdicht mit dem Gehäuse (20) verbunden sind.

4. Sammelschienenkupplung (10) nach einem der vorstehenden Ansprüche, wobei das Gehäuse (20) eine Öffnung (32) aufweist, durch die das Metallband (26) in den Innenraum des Gehäuses (20) einführbar ist, und über die das Isoliermaterial in den Innenraum des Gehäuses (20) einfüllbar ist.

5. Sammelschienenkupplung (10) nach Anspruch 5, wobei das Metallband (26) durch die Öffnung (32) hindurch mit den beiden Sammelschienen (11, 12) verbindbar, insbesondere verschraubbar ist.

6. Sammelschienenkupplung (10) nach einem der Ansprüche 5 oder 6, wobei die Öffnung (32) mit einer Platte (34) verschlossen ist, die vorzugsweise einen Deckel (38) mit einem dem Isoliermaterial zugeordneten Balg (39) aufweist.

7. Sammelschienenkupplung (10) nach einem der vorstehenden Ansprüche, wobei das Gehäuse (20) mit einer Ausbildung versehen ist, in der eine Durchführung (28) aufgenommen ist, die mit einem elektrisch leitfähigen Kontaktstück (30) versehen ist, das mit dem Metallband (26) verbunden ist.

8. Sammelschienenkupplung (10) nach Anspruch 7, wobei eine Schalteinheit der elektrischen Schaltanlage über das Kontaktstück (30) mit den Sammelschienen (11, 12) verbindbar ist.

9. Sammelschienenkupplung (10) nach Anspruch 7 und einem der Ansprüche 4 bis 6, wobei das Kontaktstück (30) durch die Öffnung (32) hindurch mit dem Metallband (26) verbindbar, insbesondere verschraubbar ist.
